(19) Europäisches Patentamt
European Patent Office
Office européen des brevets

(11) **EP 3 527 726 A1**

(12) **EUROPEAN PATENT APPLICATION**

(43) Date of publication:
**21.08.2019 Bulletin 2019/34**

(51) Int Cl.:
***E03B 3/28*** (2006.01)   ***F01N 3/20*** (2006.01)
***B01D 53/94*** (2006.01)

(21) Application number: **19156987.0**

(22) Date of filing: **13.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.02.2018 IT 201800002724**

(71) Applicant: **Magneti Marelli S.p.A.**
**20011 Corbetta (MI) (IT)**

(72) Inventors:
• **DE CESARE, Matteo**
 **71017 TORREMAGGIORE (FG) (IT)**
• **BRUGNONI, Enrico**
 **06134 PERUGIA (IT)**
• **TORCOLINI, Nicola**
 **40133 BOLOGNA (IT)**

(74) Representative: **Musconi, Roberta et al**
**Studio Torta S.p.A.**
**Via Viotti, 9**
**10121 Torino (IT)**

(54) **DEVICE FOR THE PRODUCTION OF WATER ON BOARD A VEHICLE AND METHOD TO CONTROL SAID DEVICE**

(57)    A device (1) for the production of water on board a vehicle comprising a duct (3), where an air flow flows; a tank (2), which contains a quantity of adsorbing material and is arranged along the duct (3); a first and a second adjustment valve (4, 5) for the adjustment of the duct (3), which are arranged upstream and downstream, respectively, of the tank (2) and are movable between an opening position, in which the air flow can flow towards the tank (2), and a closing position, in which the air flow cannot flow towards the tank (2), and vice versa; wherein the first and the second adjustment valve (4, 5) are controlled in a synchronous and concordant manner; and a heating element (24), which is designed to heat the adsorbing material when the first and the second adjustment valve (4, 5) are in the closing position.

FIG.1

## Description

### CROSS-REFERENCE TO RELATED APPLICATIONS

This patent application claims priority from Italian patent application no. 102018000002724 filed on February 15, 2018.

### TECHNICAL FIELD

The invention relates to a device for the production of water on board a vehicle and to a method to control said device.

### PRIOR ART

Inside vehicles there is a more and more urgent need to have demineralised water to be used in a continuous manner, for example, in order to cool down some components or reduce polluting emissions.

Italian patent application 102017000025325 of the Applicant, for example, relates to an apparatus to supply water to a tank of an exhaust system provided with exhaust gas after-treatment for NOx reduction. Said apparatus comprises an exhaust duct and a pumping device, which is drowned inside the tank and draws from the tank itself in order to feed a water solution of urea under pressure to an electromagnetic injector, which is designed to inject the water solution of urea under pressure into the exhaust duct.

The tank is supplied with powder urea and water, which are mixed inside the tank so as to obtain a water solution of urea with a variable concentration. Therefore, the tank is provided with a water supply circuit having a duct, which gets the water from a basin and is regulated by a first valve, which allows water to be introduced into the tank, in necessary, or to be drained towards the surrounding environment when the quantity of water already contained in thank is sufficient.

Said duct can alternatively draw the water from the basin collecting the condensate water of an evaporator of a conditioning system or from a rainwater collecting tank.

However, both variants discussed above are evidently affected by drawbacks, especially due to the continuity with which the necessary water is supplied.

In case the water is drawn from the basin collecting the condensate water of an evaporator of a conditioning system, indeed, the supply of water depends on the activation of the conditioning system of the vehicle, whereas, in case the water is drawn from a rainwater collecting tank, the supply strictly depends on precipitations. Furthermore, rainwater is impure and must necessarily be purified before being used on board the vehicle.

### DESCRIPTION OF THE INVENTION

Therefore, an object of the invention is to provide a device for the production of water on board a vehicle, which is not affected by the drawbacks of the prior art and, at the same time, is easy and economic to be manufactured.

A further object of the invention is to provide a method to control a device for the production of water on board a vehicle, which is not affected by the drawbacks of the prior art and, at the same time, is easy and economic to be implemented.

According to the invention, there are provided a device for the production of water on board a vehicle and a method to control a device for the production of water on board a vehicle according to the appended claims.

### BRIEF DESCRIPTION OF THE DRAWINGS

The invention will now be described with reference to the accompanying drawings, showing a non-limiting embodiment thereof, wherein:

figure 1 schematically shows a device for the production of water on board a vehicle according to the invention;
figures 2 and 3 show the development in time of two characteristic indexes of an adsorption step and of a desorption step, respectively, of an adsorbing material used in the device of figure 1.

### PREFERRED EMBODIMENTS OF THE INVENTION

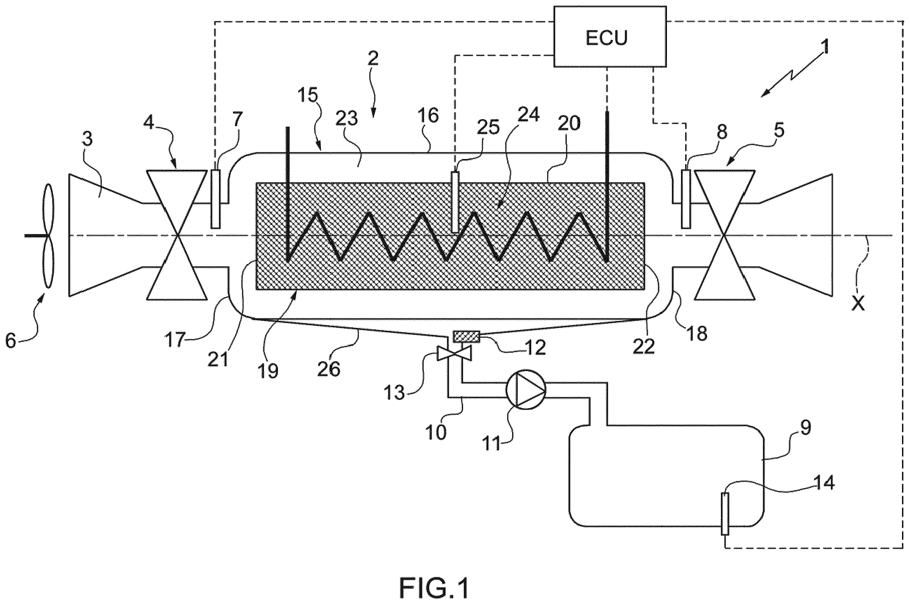

In figure 1, number 1 indicates, as a whole, a device for the production of water on board a vehicle (not shown) obtained by means of a tank 2 containing a quantity (for example, in the form of a solid matrix) of adsorbing material arranged along a duct 3 where an air flow flows.

According to alternative embodiments, the duct 3 originates from an intake duct, which feeds a fresh air flow to an internal combustion engine of the vehicle or from an independent and dedicated fresh air intake duct.

According to a preferred variant, the flow flowing into the tank 2 is adjusted by means of an adjustment valve 4, which is arranged along the duct 3 upstream of the tank 2; the adjustment valve 4 is connected to an electronic control unit ECU and is controlled by the electronic control unit ECU itself.

Similarly, according to a preferred variant, the flow flowing out of the tank 2 is adjusted by means of a respective adjustment valve 5, which is also arranged along the duct 3 downstream of the tank 2; the adjustment valve 5 is also connected to the electronic control unit ECU and is controlled by the electronic control unit ECU itself.

When the vehicle is standing still, the air flow is preferably pushed inside the tank 2 by means of a forced ventilation system, in particular by means of a fan 6, which forces the circulation of the air flow and directs it towards the tank 2. The fan 6 is arranged along the duct 3 and, according to alternative embodiments, upstream of the adjustment valve 4 or downstream of the adjustment valve 5.

Along the duct 3 there is also housed a detection device 7 comprising a pair of sensors 7 designed to determine the absolute humidity of the air flow flowing into the tank 2 through the relative humidity signal detected by a first sensor 7 and the temperature signal detected by a second sensor 7. The detection device 7 is preferably arranged upstream of the tank 2, in particular it is interposed between the tank 2 and the adjustment valve 4. The detection device 7 is connected to the electronic control unit ECU, to which it transmits signals concerning the absolute humidity of the air flow flowing into the tank 2.

Similarly, along the duct 3 there is housed a detection device 8 comprising a pair of sensors 8 designed to determine the absolute humidity of the air flow flowing out of the tank 2 through the relative humidity signal detected by a first sensor 8 and the temperature signal detected by a second sensor 8. The detection device 8 is preferably arranged downstream of the tank 2, in particular it is interposed between the tank 2 and the adjustment valve 5. The detection device 8 is connected to the electronic control unit ECU, to which it transmits signals concerning the absolute humidity of the air flow flowing out of the tank 2.

The device 1 also comprises a tank 9 collecting the water coming from the tank 2, to which it is connected by means of a duct 10, which comes out of the bottom of the tank 2.

According to a preferred variant, along the duct 10 there is housed a pumping device 11, which draws from the tank 2 in order to feed water to the collecting tank 9, which is arranged at a greater height than the tank 2. Clearly, in case the collecting tank 9 is arranged at a smaller height than the tank 2, no pumping device 11 housed along the duct 10 is needed.

Furthermore, the device 1 preferably comprises a filter 12, which is arranged in the area of the connection between the tank 2 and the duct 10 and is suited to filter the water produced in the tank 2, which flows into the collecting tank 9.

The water flow flowing out of the tank 2 and directed towards the tank 9 is adjusted by means of an adjustment valve 13, which is arranged along the duct 10, preferably downstream of the filter 12 and upstream of the pumping device 11; the adjustment valve 13 is also connected to the electronic control unit ECU and is controlled by the electronic control unit ECU itself.

Finally, there is a level sensor 14 arranged inside the collecting tank 9 and suited to detect the level of the water contained inside said collecting tank 9; the level sensor 14 is also connected to the electronic control unit ECU, to which it transmits signals concerning the level of the water contained inside the collecting tank 9.

The tank 2 is defined by an outer casing 15, which houses at least one matrix M of adsorbing material. According to a preferred variant, the outer casing 15 has a tubular shape. The outer casing 15 is provided with a side wall 16 and, at its ends, with a front wall and a rear wall indicated with 17 and 18, respectively, in figure 1. The side wall 16 preferably has a cylindrical symmetry around a symmetry axis X.

The outer casing 15 houses, on the inside, an inner container 19, which is provided with a side wall 20 and, at its ends, with a closed front wall 21 and a closed rear wall 22. The outer casing 15 preferably has a tubular shape. The side wall 20 preferably has a cylindrical symmetry around the symmetry axis X. The walls 20, 21 and 22 of the inner container 19 are provided with micro-holes so as to permit the passage both of the inflowing air flow and of the water vapour, as described more in detail below. According to a further variant, the micro-holes are made in the entire available area of the walls 20, 21 and 22 of the inner container 19, so as to maximize the passage of fresh air and water vapour. According to a further variant, the micro-holes are exclusively made in the available area of one single wall 20, 21 and 22 of the inner container 19 (preferably, the side wall 20) or they are exclusively made in the available area of a subgroup of walls 20, 21 and 22 of the inner container 19 (preferably, the front wall 21 and the rear wall 22). The micro-holes are advantageously distributed in a uniform manner over the entire available area of the walls 20, 21 and 22 of the container 19.

Between the inner container 19 and the inner surface of the outer casing 15 there is defined a hollow space 23. According to a preferred variant, the hollow space has a substantially annular shape. The hollow space 23 preferably is coaxial to the symmetry axis X. The hollow space 23 is designed to improve the desorption step, as described more in detail hereinafter.

According to a preferred variant, the device 1 is provided with a heating element 24, which is designed to heat the adsorbing material.

According to a first variant, the heating element 24 is obtained by means of an electrical resistance 24 connected to the electronic control unit ECU, which controls it. The electrical resistance 24 is preferably buried inside the adsorbing material so as to heat the core of the adsorbing material; alternatively or in addition thereto, the electrical resistance 24 can be arranged so as to surround the adsorbing material.

According to a further variant, the heating element 24 is obtained by means of a duct 24 where a fluid circulates, which can alternatively be a portion of the cooling fluid of the internal combustion engine or a portion of the exhaust gases produced by the internal combustion engine or a mix of the cooling fluid of the internal combustion engine and of the exhaust gases produced by the internal combustion engine. The fluid flow introduced into the duct 24 is adjusted by means of a special adjustment valve (not shown); each adjustment valve is connected to the electronic control unit ECU and is controlled by the electronic control unit ECU as a function of the quantity of fluid that is requested/needed for the heating of the adsorbing material. The duct 24 is preferably buried inside the adsorbing material so as to heat the core of the adsorbing material; alternatively or in addition thereto, the duct 24 can be arranged so as to surround the adsorbing material.

According to a further variant, the heating element 24 can be obtained by means of a combination of the variants discussed above; in other words, the heating element 24 comprises both the electrical resistance 24 and the duct 24 where the fluid circulates, which can alternatively be a portion of the cooling fluid of the internal combustion engine or a portion of the exhaust gases produced by the internal combustion engine or a mix of the cooling fluid of the internal combustion engine and of the exhaust gases produced by the internal combustion engine.

According to a preferred variant, the inner container 19 is also provided with a sensor 25 designed to detect the temperature $T_{ADM}$ of the adsorbing material. The temperature sensor 25 is preferably buried inside the adsorbing material; the temperature sensor 25 is also connected to the electronic control unit ECU, to which it transmits signals concerning the temperature $T_{ADM}$ of the adsorbing material. The temperature sensor 25 can alternatively be replaced by a "virtual sensor", i.e. a model for the estimation of the temperature $T_{ADM}$ of the adsorbing material stored inside the electronic control unit ECU.

In case the heating element 24 is obtained by means of the duct 24 where a portion of the exhaust gases produced by the internal combustion engine circulates, the control of the temperature $T_{ADM}$ of the adsorbing material is extremely important; the exhaust gases produced by the internal combustion engine have very high temperatures, which could cause the adsorbing material to exceed the temperature above which its chemical-physical properties deteriorate.

The electrical resistance 24 used as heating element 24 is simpler to be controlled and, in particular, can also be used in case the combustion engine of the vehicle has stopped and the state of charge of a battery of the vehicle is sufficient to ensure the operation thereof. The electrical resistance 24 used as heating element 24, however, is affected by the drawback of having a significant impact on the consumptions of the vehicle, especially in case the vehicle is equipped with an energy recovery system, which turns kinetic energy or thermal energy, which would otherwise be lost, into electric energy.

The adsorbing material used in the tank 2 can be available in the form of matrix or in the form of granules or powders.

The adsorbing material can be chosen, for example, among the following ones: silica gel or clay or calcium sulphate or zeolites or calcium oxide or given metal organic frameworks.

The choice of the material used in the tank 2 is made as a function of some parameters, such as the water adsorption speed based on the air temperature and humidity that are typical for the normal operating conditions of the vehicle, the density (and, as a consequence, the size) of the adsorbing material and, finally, the environmental impact and the cost of the adsorbing material.

Experiments have shown that silica gel, which is commonly used to limit humidity inside packages, and some zeolites can be a good compromise of the above-mentioned parameters. Furthermore, metal organic frameworks (MOF) are known, in particular zirconium-based ones, which are characterized bu excellent performances in terms of water adsorption speed, even though they can be relatively expensive.

Therefore, the electronic control unit ECU is configured to gather a number of parameters, such as the absolute humidity $AH_{IN}$ of the air flow flowing into the tank 2, which is detected by the detection device 7; the absolute humidity $AH_{OUT}$ of the air flow flowing out of the tank 2, which is detected by the detection device 8; the temperature $T_{ADM}$ of the adsorbing material detected by the sensor 25; the level of the water contained inside the collecting tank 9, which is detected by the level sensor 14. Furthermore, as a function of said gathered parameters, the electronic control unit ECU is configured to control a plurality of elements, among which there are, in particular, the adjustment valves 4, 5, 13, the heating element 24, the fan 6 (if provided) and the pumping device 11 (if provided).

Hereinafter is a description of a method to control a device 1 for the production of water on board a vehicle. The method id divided into an adsorption step and a subsequent desorption step.

During the adsorption step, the electronic control unit ECU is designed to control both adjustment valves 4 and 5 so that they are open. In this way, the adsorbing material is hit by a continuous air flow and can adsorb a given quantity of water, as a function of the temperature of the air flow. The adsorption speed is not constant and is variable as a function of the humidity of the air flow and of the quantity of water already trapped in the adsorbing material.

The electronic control unit ECU is configured to continuously monitor, through the signals coming from the detection devices 7, 8, the development of an adsorption process index $AH_{ADS}$. The adsorption process index $AH_{ADS}$ is defined as follows:

$$AH_{ADS} = AH_{IN} - AH_{OUT} \ [1]$$

$AH_{ADS}$ adsorption process index;
$AH_{IN}$ absolute humidity of the air flow flowing into the tank 2, which is detected by the detection device 7; and
$AH_{OUT}$ absolute humidity of the air flow flowing out of the tank 2, which is detected by the detection device 8.

The adsorption process index $AH_{ADS}$ simply is the difference between the absolute $AH_{IN}$ humidity of the air flow flowing into the tank 2, which is detected by the detection device 7, and the absolute $AH_{OUT}$ humidity of the air flow flowing out of the tank 2, which is detected by the detection device 8.

The electronic control unit ECU is further configured to continuously compare the value of the adsorption process index $AH_{ADS}$ with a threshold value $THR_{ADS}$, which is determined in a preliminary step and is variable as a function of the temperature of the external air.

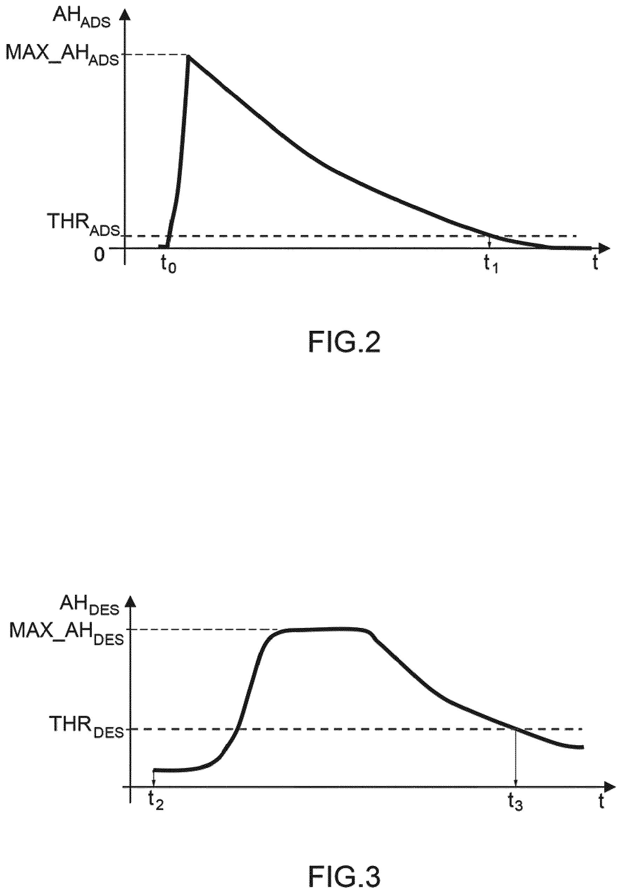

The adsorption step ends (in the instant $t_1$ indicated in figure 2) when, after having reached a peak value $MAX\_AH_{ADS}$, the adsorption process index $AH_{ADS}$ decreases until it assumes a value which is smaller than or equal to the threshold value $THR_{ADS}$. The electronic control unit ECU is configured to control the closing of both adjustment valves 4 and 5. The threshold value $THR_{ADS}$ is the (water) saturation value for the adsorbing material to be reached before going on with the subsequent desorption step.

Assuming that the threshold value $THR_{ADS}$ is equal to zero means that the adsorption step necessarily ends only when the adsorbing material is completely saturated with water (even though reaching the condition in which the adsorbing material is completely saturated with water can be inconvenient due to the excess slowing down of the adsorption step). The adsorption process index $AH_{ADS}$, said adsorption process starting in the instant to indicated in figure 2, has a development of the type shown in figure 2; in particular, the adsorption process index $AH_{ADS}$ increases in a substantially increasing manner until it reaches the peak value $MAX\_AH_{ADS}$ and then decreases in a gradual manner.

The adsorption step described above can evidently take place also when the vehicle is still. When the vehicle is moving, the air flow, which is also moving, allows the adsorption step to be quicker. Therefore, electronic control unit ECU is designed to shift both adjustment valves 4 and 5 to the opening position as soon as it detects that the vehicle has stopped. The electronic control unit ECU is preferably suited to also activate the forced ventilation system 6 in case the vehicle is still and the state of charge of the battery of the vehicle is sufficient to ensure the operation thereof.

During the subsequent desorption step, after having closed both adjustment valves 4 and 5, the electronic control unit ECU is designed to activate the heating element 24.

The heating of the adsorbing material carried out through the activation of the heating element 24 allows the water which was previously trapped in the adsorbing material to be desorbed from the adsorbing material itself, turning into water vapour. The water vapour coming into contact with the walls o the tank 2 condenses and, after the passage to the liquid state, the water is collected on the bottom of the tank 2 in order to be filtered (through the filter 12) and subsequently conveyed to the collecting tank 9.

According to a preferred variant, in order to support the condensation of the water vapour, the outer surfaces of the tank 2 (in particular, of the outer casing 15) are cooled through the ambient air, forced by the movement of the vehicle, which touches fins (not shown) arranged on the periphery of the tank 2; or through a low-temperature conditioning circuit (in which a conditioning fluid flows at approximately 50°C), preferably obtained in the walls 16, 17, 18; or through a surface treatment (for example, in order to increase the surface roughness) of the inner surfaces of the tank 2 and, in particular, of the outer casing 15; or through any combination of the variants described above.

Preferably, in order to improve the step during which the water is collected on the bottom of the tank 2 and conveyed towards the filter 12, a base wall 26 of the tank 2 has a V-shaped profile inclined towards the filter 12; the inclined profile of the base wall 26 allows the water to be conveyed towards the collecting tank 9.

The electronic control unit ECU is configured to continuously monitor, through the signals coming from the detection devices 7, 8, the development of a desorption process index $AH_{DES}$. The desorption process index $AH_{DES}$ is defined as follows:

$$AH_{DES} = a * AH_{IN} + b * AH_{OUT} \quad [2]$$

$AH_{DES}$ desorption process index;
$AH_{IN}$ absolute humidity of the air flow flowing into the tank 2, which is detected by the detection device 7;
$AH_{OUT}$ absolute humidity of the air flow flowing out of the tank 2, which is detected by the detection device 8; and
a, b coefficients.

When the adjustment valves 4, 5 are both closed, inside the tank 2 the two detection devices 7, 8 should detect the same absolute humidity value.

Hence, the desorption process index $AH_{DES}$ can be represented by the absolute humidity $AH_{IN}$ of the air flow flowing into the tank 2 detected by the detection device 7 (in case the coefficient a is unitary and the coefficient b is zero) or by the absolute humidity $AH_{OUT}$ of the air flow flowing out of the tank 2 detected by the detection device 8 (in case the coefficient b is unitary and the coefficient a is zero); alternatively, the desorption process index $AH_{DES}$ can be represented by any linear combination (variable as a function of the values assumed by the coefficients a, b and c) of the values of the absolute humidity $AH_{IN}$ of the air flow flowing into the tank 2, which is detected by the detection device 7, and of the absolute humidity $AH_{OUT}$ of the air flow flowing out of the tank 2, which is detected by the detection device 8.

The electronic control unit ECU is further configured to continuously compare the value of the desorption process index $AH_{DES}$ with a threshold value $THR_{DES}$,

which is determined in a preliminary step and is variable as a function of the temperature of the external air.

The desorption step ends (in the instant $t_3$ indicated in figure 2) when, after having reached a peak value $MAX\_AH_{DES}$, the desorption process index $AH_{DES}$ decreases until it assumes a value which is smaller than or equal to the threshold value $THR_{DES}$. Then, the electronic control unit ECU is configured to deactivate the heating element 24 and, subsequently, control the opening of both adjustment valves 4 and 5. The threshold value $THR_{DES}$ represents the achievement of the complete desorption of the water trapped in the adsorbing material or the achievement of a condition in which the desorption process is excessively slow.

Assuming that the threshold value $THR_{DES}$ is equal to zero means that the desorption step necessarily ends only when the adsorbing material is completely free from water (even though reaching the condition in which the adsorbing material is completely free from water can be inconvenient due to the excess slowing down of the desorption step). The desorption process index $AH_{DES}$, said desorption process starting in the instant $t_2$ indicated in figure 3, typically has a development of the type shown in figure 3; in particular, the desorption process index $AH_{DES}$ increases until it reaches the peak value $MAX\_AH_{DES}$, stabilizes for an amount of time with a variable duration and then decreases in a gradual manner.

In case the level sensor 14 detects that a level of the water contained inside the collecting tank 9 exceeds a limit value, the desorption step cannot evidently start. Before going on with the closing of both adjustment valves 4 and 5 and with the activation of the heating element 24, the electronic control unit ECU is designed to process the signal concerning the level of the water contained inside the collecting tank 9, which is transmitted by the level sensor 14, and to compare it with said limit value.

The electronic control unit ECU is further configured to continuously monitor, during the desorption step, the level of the water contained inside the collecting tank 9 through the signal transmitted by the level sensor 14, so as to stop the desorption step as soon as the level of the water contained inside the collecting tank 9 exceeds the threshold value.

According to a further variant, the vehicle is provided with at least one photovoltaic panel designed for the production of a given power suited to ensure the operation of the electrical resistance 24 used as heating element 24 and/or of the forced ventilation system 6, also in case the combustion engine has stopped (and, for example, the state of charge of the battery of the vehicle is not sufficient).

The adjustment valves, which are indicated with 4 and 5 respectively, are evidently controlled in a synchronous manner (i.e. they are opened or closed at the same time by the electronic control unit ECU). Furthermore, the adjustment valves, which are indicated with 4 and 5 respectively, are evidently controlled in a concordant manner, i.e. jointly or in a corresponding fashion (which means that both adjustment valves 4, 5 are open or closed and it can never happen that an adjustment valve 4, 5 is open while the other adjustment valve 5 is closed).

The device 1 for the production of water on board a vehicle and the method to control said device 1, as disclosed above, have some advantages. First of all, they are simple and economic to be manufactured and implemented, the device 1 is compact and allows a significant quantity of water to be used on board the vehicle to be produced in an efficient manner.

## Claims

1. A device (1) for the production of water on board a vehicle comprising:

   a duct (3), where an air flow flows on the inside;
   a first tank (2), which contains a quantity of adsorbing material and is arranged along the duct (3) so as to be hit by the air flow;
   a first adjustment valve (4), which is arranged along the duct (3) upstream of the tank (2); the first adjustment valve (4) is movable between an opening position, in which the air flow can flow towards the first tank (2), and a closing position, in which the air flow cannot flow towards the first tank (2), and vice versa;
   a second adjustment valve (5), which is also arranged along the duct (3) downstream of the tank (2); the second adjustment valve (5) is movable between an opening position, in which the air flow can flow out of the first tank (2), and a closing position, in which the air flow cannot flow out of the first tank (2), and vice versa;
   a heating element (24), which is designed to heat the adsorbing material when the first and the second adjustment valves (4, 5) are in the closing position, so as to cause the desorption of the water previously trapped in the adsorbing material;
   a first detection device (8), which is designed to detect the absolute humidity of the air flow flowing out of the tank (2) and is housed along the duct (3) interposed between the tank (2) and the second adjustment valve (5);
   a second detection device (7), which is designed to detect the absolute humidity of the air flow flowing into the tank (2) and is housed along the duct (3) interposed between the tank (2) and the first adjustment valve (4); and
   an electronic control unit (ECU), which is connected to the first detection device (8) and to the second detection device (7) and is designed to control the first and the second adjustment valve (4, 5) in a synchronous and concordant manner as a function of the absolute humidity detected by the detection devices (7, 8).

2. A device according to claim 1, wherein the adsorbing material is housed in a container (19) arranged inside the tank (2) provided with walls (20, 21, 22) that are at least partially micro-perforated.

3. A device according to claim 2, wherein between the container (19) and the tank (2) there is defined a hollow space (23), which is created in order to improve the desorption of the water trapped in the adsorbing material.

4. A device according to any one of the preceding claims and comprising a sensor (25), which is designed to detect the temperature of the adsorbing material and preferably is buried inside the adsorbing material.

5. A device according to any one of the preceding claims, wherein the heating element (24) is buried inside the adsorbing material, so as to heat the heart of the adsorbing material.

6. A device according to any one of the preceding claims, wherein the heating element (24) is arranged so that it surrounds the adsorbing material, so as to heat the periphery of the adsorbing material.

7. A device according to any one of the preceding claims, wherein the heating element (24) is obtained by means of an electrical resistance (24).

8. A device according to any one of the preceding claims, wherein the heating element (24) is obtained by means of a channel (24) where a fluid circulates, which can alternatively be a portion of the cooling fluid of an internal combustion engine of the vehicle or a portion of the exhaust gases produced by said internal combustion engine or a mix of the cooling fluid and of the exhaust gases of said internal combustion engine.

9. A device according to any one of the preceding claims and comprising a forced ventilation system (6), which is arranged along the duct (3) so as to force the air flow flowing into the tank (2), preferably upstream of the first adjustment valve (4) or downstream of the second adjustment valve (5).

10. A device according to any one of the preceding claims and comprising a second tank (9) to collect the water coming from the first tank (2), to which it is connected by means of a pipe (10) coming out of the first tank (2).

11. A device according to claim 10 and comprising a pumping device (11), which is arranged along the pipe (10) so as to get water from the first tank (2) and feed it to the second tank (9).

12. A device according to claim 10 or 11 and comprising a filter (12), which is arranged in the area of the connection between the first tank (2) and the pipe (10) and is suited to filter the water produced in the first tank (2), which flows into the second tank (9).

13. A device according to any one of the claims from 10 to 12 and comprising a third adjustment valve (13), which is arranged along the pipe (10).

14. A device according to any one of the claims from 10 to 13 and comprising a level sensor (14), which is arranged inside the second tank (9).

15. A device according to any one of the claims from 10 to 14, wherein a base wall (26) of the first tank (2) has a V-shaped profile, which is inclined so as to convey the water towards the second tank (9).

16. A device according to any one of the preceding claims, wherein the adsorbing material is chosen among: silica gel or clay or calcium sulphate or zeolites or calcium oxide or metal organic frameworks, in particular zirconium-based ones.

17. A device according to any one of the preceding claims, wherein, in order to allow the first tank (2) to cool down, the outer surfaces of the first tank (2) have, connected to them, peripheral fins.

18. A device according to any one of the preceding claims, wherein, in order to allow it to cool down, the first tank (2) is provided with a conditioning circuit, in which a conditioning fluid preferably flows at temperatures around 50°C.

19. A device according to any one of the preceding claims, wherein the inner surfaces of the first tank (2) are treated by means of a proper surface treatment, in particular in order to increase surface roughness.

20. A method to control a device (1) for the production of water on board a vehicle realized according to any one of the claims from 1 to 19 and comprising:

an adsorption step, in which the adsorbing material is hit by the air flow and the first and the second adjustment valves (4, 5) are kept open and the heating element (24) is deactivated; wherein the adsorption step comprises the substeps of detecting the development of an adsorption process index ($AH_{ADS}$) and comparing it with a first threshold value ($THR_{ADS}$), and wherein the adsorption step is interrupted when the adsorption process index ($AH_{ADS}$) is smaller than or equal to the first threshold value ($THR_{ADS}$); and

a desorption step for the desorption of the water trapped in the adsorbing material, in which the first and the second adjustment valves (4, 5) are kept closed and the heating element (24) is activated; wherein the desorption step comprises the sub-steps of detecting the development of a desorption process index ($AH_{DES}$) and comparing it with a second threshold value ($THR_{DES}$), and wherein the desorption step is interrupted when the desorption process index ($AH_{DES}$) is smaller than or equal to the second threshold value ($THR_{DES}$).

21. A method according to claim 20 and comprising the further step of controlling the first and the second adjustment valves (4, 5) in a synchronous and concordant manner.

22. A method according to claim 20 or 21, wherein the adsorption process index ($AH_{ADS}$) is calculated through the difference between the absolute humidity ($AH_{IN}$) of the air flow flowing into the first tank (2) and the absolute humidity ($AH_{OUT}$) of the air flow flowing out of the first tank (2).

23. A method according to any one of the claims from 20 to 22, wherein the desorption process index ($AH_{DES}$) is represented by the absolute humidity ($AH_{IN}$) of the air flow flowing into the first tank (2) or by the absolute humidity ($AH_{OUT}$) of the air flow flowing out of the first tank (2) or by a linear combination of the absolute humidity ($AH_{IN}$) of the air flow flowing into the first tank (2) and of the absolute humidity ($AH_{OUT}$) of the air flow flowing out of the first tank (2).

24. A method according to any one of the claims from 20 to 23, wherein the first threshold value ($THR_{ADS}$) and/or the second threshold value ($THR_{DES}$) are variable depending on the temperature of the air on the outside.

25. A method according to any one of the claims from 20 to 24, wherein the device (1) is provided with a second tank (9) to collect the water coming from the first tank (2), to which it is connected by means of a pipe (10) coming out of the first tank (2); the method comprises the further step of inhibiting the desorption step in case the water level inside the second tank (9) is greater than or equal to a limit value.

FIG.1

EP 3 527 726 A1

FIG.2

FIG.3

Europäisches
Patentamt

European
Patent Office

Office européen
des brevets

## EUROPEAN SEARCH REPORT

Application Number

EP 19 15 6987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/107832 A1 (TONGUE STEPHEN [US] ET AL) 10 June 2004 (2004-06-10)<br>* paragraphs [0006] - [0008], [0013] - [0024] *<br>* figures 1-3 * | 1-25 | INV.<br>E03B3/28<br>F01N3/20<br>B01D53/94 |
| A | DE 35 25 237 A1 (KAUBEK FRITZ; MAIER LAXHUBER PETER)<br>15 January 1987 (1987-01-15)<br>* column 1 - column 2 *<br>* figure 1 * | 1-25 | |
| A | DE 10 2011 101006 A1 (AUDI AG [DE])<br>25 October 2012 (2012-10-25)<br>* paragraphs [0022] - [0027] *<br>* figure 1 * | 1-25 | |
| A | DE 199 18 591 A1 (FEV MOTORENTECH GMBH [DE]) 26 October 2000 (2000-10-26)<br>* column 4, line 21 - line 52 *<br>* figure 3 * | 1-25 | |

TECHNICAL FIELDS
SEARCHED      (IPC)

E03B
F01N
B01D

The present search report has been drawn up for all claims

| Place of search | Date of completion of the search | Examiner |
|---|---|---|
| Munich | 22 March 2019 | Ikas, Gerhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 6987

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2019

| Patent document cited in search report | | Publication date | Patent family member(s) | | Publication date |
|---|---|---|---|---|---|
| US 2004107832 | A1 | 10-06-2004 | AT<br>AU<br>EP<br>US<br>WO | 474654 T<br>2003293417 A1<br>1567244 A1<br>2004107832 A1<br>2004052508 A1 | 15-08-2010<br>30-06-2004<br>31-08-2005<br>10-06-2004<br>24-06-2004 |
| DE 3525237 | A1 | 15-01-1987 | NONE | | |
| DE 102011101006 | A1 | 25-10-2012 | NONE | | |
| DE 19918591 | A1 | 26-10-2000 | NONE | | |

EPO FORM P0459

For more details about this annex : see Official Journal of the European Patent Office, No. 12/82

**REFERENCES CITED IN THE DESCRIPTION**

**Patent documents cited in the description**

- IT 102018000002724

- IT 102017000025325